# EUROPÄISCHE PATENTSCHRIFT

(11) **EP 4 662 540 B1**
(45) Veröffentlichungstag und Bekanntmachung des Hinweises auf die Patenterteilung: **02.12.2026**
(21) Anmeldenummer: 24701681.9
(22) Anmeldetag: 23.01.2024
(51) Int. Cl.: G05D 1/249, G05D 1/617

(54) **SYSTEM UND VERFAHREN ZUM INFRASTRUKTURGESTÜTZTEN ASSISTIEREN EINES MOTORISIERTEN FAHRZEUGS**
SYSTEM AND METHOD FOR PROVIDING INFRASTRUCTURE-SUPPORTED ASSISTANCE TO A MOTORISED VEHICLE
SYSTÈME ET PROCÉDÉ DE FOURNITURE D'UNE ASSISTANCE SUPPORTÉE PAR INFRASTRUCTURE À UN VÉHICULE MOTORISÉ

(30) Priorität: 08.02.2023 DE 102023201017
(43) Veröffentlichungstag der Anmeldung: 17.12.2025
(73) Patentinhaber: Robert Bosch GmbH, 70442 Stuttgart (DE)
(72) Erfinder: NORDBRUCH, Stefan, 71229 Leonberg (DE); GASZCZAK, Anna, 70736 Fellbach (DE); NIMMO, Matthew, 71642 Ludwigsburg (DE); NICODEMUS, Rolf, 74321 Bietigheim-Bissingen (DE)
(86) Internationale Anmeldenummer: PCT/EP2024/051529
(87) Internationale Veröffentlichungsnummer: WO 2024/165311

(56) Entgegenhaltungen:
- DE-A1- 102022 106 278
- US-A1- 2022 111 528

## Beschreibung

Die Erfindung betrifft ein System und ein Verfahren zum infrastrukturgestützten Assistieren eines zumindest teilautomatisiert geführten, motorisierten Fahrzeugs bei seiner Fahrt durch eine Fabrik, eine Fabrik, ein Computerprogramm und ein maschinenlesbares Speichermedium.

### Stand der Technik

Die Offenlegungsschrift DE 10 2012 222 562 A1 offenbart ein System für bewirtschaftete Parkflächen zur Überführung eines Fahrzeugs von einer Startposition in eine Zielposition. Hierbei fährt das Fahrzeug beispielsweise autonom.

Es besteht ein Bedarf, zumindest teilautomatisiert geführte, motorisierte Fahrzeuge bei ihrer Fahrt durch eine Fabrik effizient zu unterstützen respektive solchen Fahrzeugen effizient zu assistieren.

Die Offenlegungsschrift DE 10 2022 106 278 A1 offenbart ein Sensordatenverwaltungssystem für einen mobilen Roboter. Das System arbeitet in zwei verschiedenen Betriebsmodi: einem ersten Modus, der primär Nicht-Kameradaten (z.B. LiDAR, Infrarot) verwendet, und einem zweiten Modus, der auf Kameradaten zurückgreift. Ein Umschalten vom ersten in den zweiten, kamerabasierten Modus erfolgt dynamisch, wenn ein zur Laufzeit ermittelter "Konfidenzfaktor" für die Umgebungswahrnehmung unter einen Schwellenwert fällt. Dies kann beispielsweise in einem "Sicherheitskontextmodus" der Fall sein, etwa wenn Menschen anwesend sind, um eine zuverlässigere Detektion zu gewährleisten.

Weiterhin beschreibt die Offenlegungsschrift US 2022/0111528 A1 de ein System zur Erhöhung der Sicherheit in einer Umgebung, in der autonome mobile Roboter (AMR) und Menschen zusammenarbeiten. Der Fokus liegt auf der Erkennung von unbeabsichtigten menschlichen Aktionen mittels Kl-basierter Analyse von Infrastruktursensoren (z.B. Kameras, LIDAR). Zudem wird eine dynamische Definition von Sicherheitsbereichen ("safety areas" oder "safety hulls") um die Roboter herum und die Identifikation von Risikobereichen ("risk areas"), die entstehen, wenn sich solche Sicherheitsbereiche überlappen, beschrieben.

### Offenbarung der Erfindung

Die der Erfindung zugrunde liegende Aufgabe ist darin zu sehen, ein Konzept zum effizienten infrastrukturgestützten Assistieren eines zumindest teilautomatisiert geführten, motorisierten Fahrzeugs bei seiner Fahrt durch eine Fabrik bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Die Erfindung basiert auf der Erkenntnis und schließt diese mit ein, dass die obige Aufgabe dadurch gelöst wird, dass der erste und der zweite Bereich der Fabrik durch verschiedene Erfassungseinrichtungen überwacht respektive erfasst werden, welche unterschiedliche Sicherheitsstufen, wobei der Begriff Sicherheitsanforderung synonym verwendet werden kann, erfüllen: Hierbei ist vorgesehen, dass die zweite Erfassungseinrichtung eine höhere Sicherheitsstufe erfüllt als die erste Erfassungseinrichtung. Somit kann der zweite Bereich sicherer und zuverlässiger als der erste Bereich erfasst respektive überwacht werden. Somit können für den zweiten Bereich eventuelle Sicherheitsprobleme sicherer und zuverlässiger detektiert werden, die eventuell bei der zumindest teilautomatisiert geführten Fahrt des Fahrzeugs auftreten können. Somit kann in vorteilhafter Weise eine Sicherheit für das Fahrzeug und für eine Umgebung des Fahrzeugs erhöht werden, wenn das Fahrzeug durch den zweiten Bereich fährt. Dies bedeutet also, dass der zweite Bereich gesondert durch die zweite Erfassungseinrichtung erfasst respektive überwacht wird.

Somit können für die Fabrik zum Beispiel mehrere Bereiche implementiert oder festgelegt werden, für die unterschiedlich hohe Sicherheitsanforderungen gelten. Ein erster Bereich kann beispielsweise ein Bereich der Fabrik sein, innerhalb welchem sich keine Menschen aufhalten dürfen. Ein zweiter Bereich der Fabrik kann beispielsweise ein Bereich sein, innerhalb welchem sich Menschen befinden dürfen. Bei einer Fahrt des Fahrzeugs durch den ersten Bereich ist somit die Wahrscheinlichkeit, dass es zu einer gefährlichen Situation des Fahrzeugs mit einem Menschen kommt, der sich ohnehin nicht in dem ersten Bereich aufhalten darf, relativ gering verglichen zu einer Fahrt des Fahrzeugs durch den zweiten Bereich, innerhalb welchem sich Menschen aufhalten dürfen. Hier kann es zu gefährlichen Situationen kommen, wenn z. B. ein Mensch plötzlich in den Fahrweg des Fahrzeugs tritt. Von daher ist es vorteilhaft und sinnvoll, den zweiten Bereich durch eine gesonderte Erfassungseinrichtung zu erfassen, welche höhere Sicherheitsanforderungen erfüllt, um solche gefährlichen Situationen detektieren zu können, um entsprechend darauf reagieren zu können, indem beispielsweise zumindest eine Sicherheitsaktion durchgeführt wird.

Somit wird also insbesondere der technische Vorteil bewirkt, dass die zweite Erfassungseinrichtung besonders sicher im Vergleich zur ersten Erfassungseinrichtung ist und somit den zweiten Bereich entsprechend sicherer und zuverlässiger überwachen respektive erfassen kann. Mit anderen Worten werden an die zweite Erfassungseinrichtung höhere Sicherheitsanforderungen gestellt, die dieses erfüllen muss, als an die erste Erfassungseinrichtung. Somit kann im Umkehrschluss aber die erste Erfassungseinrichtung einfacher implementiert werden, da es in der Regel technisch weniger komplex und aufwändig ist, geringere Sicherheitsanforderungen zu erfüllen als höhere Sicherheitsanforderungen. Beispielsweise ist die zweite Erfassungseinrichtung hinsichtlich des Erfassens redundant aufgebaut, um die höhere Sicherheitsstufe zu erfüllen. Hingegen kann die erste Erfassungseinrichtung hinsichtlich des Erfassens nicht-redundant aufgebaut sein, so dass entsprechend weniger technische Hardware-Ressourcen und/oder Software-Ressourcen implementiert sein müssen. Dies verringert z. B. Entwicklungskosten für das die erste Erfassungseinrichtung. Dies verringert z. B. eine Entwicklungszeit für die erste Erfassungseinrichtung.

Die zweite Erfassungseinrichtung ist insbesondere ausschließlich für die Erfassung des zweiten Bereichs zuständig.

Laut der Erfindung, ist die jeweilige Sicherheitsstufe der ersten Erfassungseinrichtung und der zweiten Erfassungseinrichtung ein Element ausgewählt aus der folgenden Gruppe von Sicherheitsstufen ist: QM, ASIL-A, ASIL-B, ASIL-C, ASIL-D, SIL-1, SIL-2, SIL-3. Dadurch wird z. B. der technische Vorteil bewirkt, dass besonders geeignete und genormte Sicherheitsstufen für die erste Erfassungseinrichtung und die zweite Erfassungseinrichtung vorgesehen sind. Die Abkürzung "ASIL" steht für die englischen Begriffe "Automotive Safety Integrity Level", was ins Deutsche mit "Automotive Sicherheitsintegritätslevel" übersetzt werden kann. "Automotive Safety Integrity Level" ist eine Schlüsselkomponente des Standards ISO26262. ASIL unterscheidet zwischen vier verschiedenen ASIL-Risikostufen, die mit ASIL-A, ASIL-B, ASIL-C und ASIL-D gekennzeichnet sind.

Die Abkürzung "SIL" steht für die englischen Begriffe "Safety Integrity Level", was ins Deutsche mit "Sicherheitsintegritätslevel" übersetzt werden kann. "Safety Integrity Level" ist eine Schlüsselkomponente des Standards IEC EN 61508. SIL unterscheidet zwischen vier verschiedenen SIL-Risikostufen, die mit SIL-1, SIL-2, SIL-3 und SIL-4 gekennzeichnet sind.

QM steht für "Quality Management", was insbesondere bedeutet, dass Risiken tolerierbar sind, so dass besondere Sicherheitsanforderungen unnötig sind und lediglich Standardqualitätsanforderungen ausreichend sind.

In einer Ausführungsform des Systems ist vorgesehen, dass die zweite Erfassungseinrichtung mehrere Umfeldsensoren umfasst, welche derart angeordnet sind, dass zumindest zwei der Umfeldsensoren einen gemeinsamen Teilbereich des zweiten Bereichs erfassen können.

Dadurch wird zum Beispiel der technische Vorteil bewirkt, dass der gemeinsame Teilbereich effizient erfasst werden kann. Insbesondere wird dadurch eine Redundanz hinsichtlich des Erfassens des Teilbereichs bewirkt. Sollte zum Beispiel einer der Umfeldsensoren ausfallen, so kann der Teilbereich weiter mittels des anderen der Umfeldsensoren erfasst werden. Zum Beispiel kann ein Ergebnis des Erfassens des einen Umfeldsensors durch ein Ergebnis des Erfassens des anderen Umfeldsensors mittels der Datenverarbeitungseinrichtung geprüft werden oder umgekehrt. Dadurch wird zum Beispiel der technische Vorteil bewirkt, dass eine effiziente Prüfung eines Ergebnis eines Erfassens durchgeführt werden kann. Zum Beispiel ist vorgesehen, dass beide Ergebnisse das gleiche angeben müssen, damit den Ergebnissen beiden vertraut werden kann.

Ein Ergebnis im Sinne der Beschreibung gibt zum Beispiel an, ob der Teilbereich belegt oder unbelegt, also frei, von einem potenziellen Kollisionsobjekt für das Fahrzeug ist. Ein Ergebnis im Sinne der Beschreibung gibt zum Beispiel an, ob, und beispielsweise, wenn ja, welches Objekt sich in dem Teilbereich befindet.

In einer Ausführungsform des Systems ist vorgesehen, dass die zweite Erfassungseinrichtung mehrere Umfeldsensoren umfasst, welche auf einer jeweiligen Erfassungstechnologie basieren, wobei die Umfeldsensoren derart angeordnet sind, dass zumindest zwei Umfeldsensoren mit einer unterschiedlichen Erfassungstechnologie einen gemeinsamen Teilbereich des zweiten Bereichs erfassen können.

Dadurch wird zum Beispiel der technische Vorteil bewirkt, dass der gemeinsame Teilbereich effizient erfasst werden kann. Insbesondere wird dadurch eine Redundanz hinsichtlich des Erfassens des Teilbereichs bewirkt. Sollte zum Beispiel einer der Umfeldsensoren ausfallen, so kann der Teilbereich weiter mittels des anderen der Umfeldsensoren erfasst werden. Zum Beispiel kann ein Ergebnis des Erfassens des einen Umfeldsensors durch ein Ergebnis des Erfassens des anderen Umfeldsensors mittels der Datenverarbeitungseinrichtung geprüft werden oder umgekehrt. Dadurch wird zum Beispiel der technische Vorteil bewirkt, dass eine effiziente Prüfung eines Ergebnis eines Erfassens durchgeführt werden kann. Zum Beispiel ist vorgesehen, dass beide Ergebnisse das gleiche angeben müssen, damit den Ergebnissen beiden vertraut werden kann. Dass unterschiedliche Erfassungstechnologien vorgesehen sind, weist zum Beispiel den technischen Vorteil auf, dass Unzulänglichkeiten oder Nachteile einer Erfassungstechnologie durch Vorteile der anderen Erfassungstechnologie kompensiert werden können. Beispielsweise können sich die Erfassungstechnologien effizient ergänzen. Mittels eines Infrarotsensors kann zum Beispiel effizient ein Lebewesen detektiert werden, wohingegen mittels einer Videokamera effizient ermittelt werden kann, um was für ein Lebewesen es sich handelt. Mittels eines Radarsensors kann zum Beispiel effizient eine Distanz zum Lebewesen ermittelt werden.

In einer Ausführungsform des Systems ist vorgesehen, dass die Datenverarbeitungseinrichtung eingerichtet ist, die zweiten Erfassungsdaten unter Verwendung von zumindest zwei unterschiedlichen Auswertealgorithmen zu verarbeiten, um entsprechend zumindest zwei Ergebnisse des jeweiligen Verarbeitens zu erhalten, wobei die Datenverarbeitungseinrichtung eingerichtet ist, die Infrastrukturassistenzdaten basierend auf den zumindest zwei Ergebnissen zu ermitteln.

Dadurch wird zum Beispiel der technische Vorteil bewirkt, dass die Infrastrukturassistenzdaten effizient ermittelt werden können. Was bereits vorstehend im Zusammenhang mit zwei Umfeldsensoren, welche einen gemeinsamen Teilbereich erfassen, ausgeführt wurde, gilt analog für die Verwendung von zumindest zwei unterschiedlichen Auswertealgorithmen. Ein Programmierfehler in einem der Algorithmen kann zum Beispiel zu einem fehlerhaften Ergebnis führen, was dadurch erkannt wird, dass ein anderer der Algorithmen ein anderes Ergebnis liefert. Somit ist zum Beispiel vorgesehen, dass die Ergebnisse nur dann für das Ermitteln der Infrastrukturassistenzdaten verwendet werden, wenn diese das gleiche angeben.

In einer Ausführungsform des Systems ist vorgesehen, dass die erste Erfassungseinrichtung eingerichtet ist, den zweiten Bereich zu erfassen.

Dadurch wird zum Beispiel der technische Vorteil bewirkt, dass der zweite Bereich effizient erfasst werden kann. Somit stehen zusätzliche Informationen für die Datenverarbeitungseinrichtung zur Verfügung, um die Infrastrukturassistenzdaten zu ermitteln. Selbst wenn diese Informationen hinsichtlich einer Sicherheit weniger vertrauenswürdig sind als die Informationen, welche die zweite Erfassungseinrichtung bereitstellt, so können diese Informationen dennoch beispielsweise zur Plausibilisierung verwendet werden. Das bedeutet zum Beispiel, dass bei abweichenden Informationen eine Diagnose, beispielsweise eine Selbstdiagnose, der ersten und/oder der zweiten Erfassungseinrichtung durchgeführt werden kann, beispielsweise mittels der Datenverarbeitungseinrichtung. Das bedeutet zum Beispiel, dass bei über einen vorbestimmten Zeitraum abweichenden Informationen das System angehalten wird und eine Prüfung des Systems durch ein Servicepersonal angefordert wird.

Allgemein kann zum Beispiel vorgesehen sein, dass die zweite Erfassungseinrichtung mehrere Umfeldsensoren umfasst, welche zum Beispiel derart angeordnet sind, dass zumindest zwei, also insbesondere mehr als zwei, der Umfeldsensoren einen gemeinsamen Teilbereich des zweiten Bereichs erfassen können.

Allgemein kann zum Beispiel vorgesehen sein, dass es mehrere Teilbereiche des zweiten Bereichs gibt, die mittels zumindest zwei, Umfeldsensoren der zweiten Erfassungseinrichtung erfasst werden respektive erfasst werden können, da diese entsprechend räumlich verteilt innerhalb des zweiten Bereichs angeordnet sind.

Eine Erfassungseinrichtung im Sinne der Beschreibung, also insbesondere die erste Erfassungseinrichtung und/oder die zweite Erfassungseinrichtung, umfasst z. B. einen oder mehrere Umfeldsensoren, die z. B. räumlich verteilt innerhalb des entsprechenden Bereichs, also innerhalb des ersten Bereichs respektive zweiten Bereichs, angeordnet sind.

Ein Umfeldsensor im Sinne der Beschreibung ist beispielsweise einer der folgenden Umfeldsensoren: Radarsensor, LIDAR-Sensor, Bildsensor, insbesondere Bildsensor einer Videokamera, Infrarotsensor, Ultraschallsensor und Magnetfeldsensor.

Ein Erfassungstechnologie ist zum Beispiel eine der folgenden Erfassungstechnologien: Radar-Technologie, LIDAR-Technologie, Bildsensor-Technologie, Infrarotsensor-Technologie, Ultraschallsensor-Technologie, Magnetfeldsensor-Technologie.

Ein Umfeldsensor im Sinne der Beschreibung ist insbesondere eingerichtet, sein jeweiliges Umfeld, also seine Umgebung, zu erfassen und auf der Erfassung basierende Umfeldsensordaten auszugeben. Die Erfassungsdaten umfassen beispielsweise die Umfeldsensordaten. Beispielsweise werden die Erfassungsdaten basierend auf den Umfeldsensordaten ermittelt. Umfeldsensordaten umfassen beispielsweise Umfeldsensorrohdaten. Umfeldsensordaten beschreiben oder repräsentieren insbesondere ein Umfeld oder eine Umgebung des entsprechenden Umfeldsensors.

Z. B. ist vorgesehen, dass die erste Erfassungseinrichtung zusätzlich eingerichtet ist, den zweiten Bereich zu erfassen. In diesem Fall beschreiben somit die ersten Erfassungsdaten den ersten und den zweiten Bereich. Somit stehen der Datenverarbeitungseinrichtung in effizienter Weise zusätzliche Informationen zur Verfügung, um dem Fahrzeug bei einer Fahrt durch den zweiten Bereich effizient zu assistieren.

Dies bedeutet zum Beispiel, dass für die Assistenz des Fahrzeugs durch die Datenverarbeitungseinrichtung bei der Fahrt durch den zweiten Bereich beispielsweise lediglich die Daten der zweiten Erfassungseinrichtung zur Verfügung stehen oder zum Beispiel sowohl die Erfassungsdaten der zweiten Erfassungseinrichtung als auch die Erfassungsdaten der ersten Erfassungseinrichtung.

In einer Ausführungsform des Systems umfasst dieses zumindest eine in einem Übergangsbereich von dem ersten Bereich zu dem zweiten Bereich angeordnete Lichtschranke, welche eingerichtet ist, eine Bewegung eines Objekts zu detektieren und bei Detektion ein Detektionssignal auszugeben, wobei die Datenverarbeitungseinrichtung eingerichtet ist, ansprechend auf das Detektionssignal zu prüfen, ob es sich bei dem Objekt um das Fahrzeug handelt oder nicht, wobei, wenn nein, festzulegen, dass ein Sicherheitsproblem detektiert wurde..

Dadurch wird zum Beispiel der technische Vorteil bewirkt, dass eine zusätzliche Absicherung vorhanden ist, ob jemand oder etwas sich in den zweiten Bereich bewegt hat, was ein Sicherheitsproblem darstellen kann. Das Prüfen kann zum Beispiel basierend auf den ersten und/oder zweiten Erfassungsdaten durchgeführt werden.

Zum Beispiel sind zumindest zwei Lichtschranken vorgesehen, sodass über eine Reihenfolge der ausgegebenen Detektionssignale eine Richtungsangabe der Bewegung des Objekts durch die Datenverarbeitungseinrichtung ermittelt wird. Ausführungen, die in dem Zusammenhang mit dem Verfahren gemacht sind, gelten analog für das System und umgekehrt. Dies bedeutet, dass sich Verfahrensmerkmale aus entsprechenden Systemmerkmalen und umgekehrt ergeben.

In einer Ausführungsform ist vorgesehen, dass das System eingerichtet ist, alle Schritte des Verfahrens nach dem zweiten Aspekt auszuführen.

Nach einer Ausführungsform ist vorgesehen, dass das System programmtechnisch eingerichtet ist, das Computerprogramm nach dem vierten Aspekt auszuführen.

Die Erfassungsdaten werden zum Beispiel mittels der Datenverarbeitungseinrichtung verarbeitet, um zumindest ein Sicherheitsproblem zu detektieren. Das bedeutet, dass die Datenverarbeitungseinrichtung zum Beispiel eingerichtet ist, die ersten und/oder zweiten Erfassungsdaten zu verarbeiten, um zumindest ein Sicherheitsproblem zu detektieren.

Ein Sicherheitsproblem ist beispielsweise eines der folgenden Sicherheitsprobleme: Mensch befindet sich innerhalb einer vorbestimmten Mindestdistanz zum Fahrzeug, Mensch bewegt sich in Richtung eines Fahrschlauchs und/oder eines Fahrwegs des Fahrzeugs, Roboter befindet sich innerhalb einer vorbestimmten Mindestdistanz zum Fahrzeug, Roboter bewegt sich in Richtung eines Fahrschlauchs und/oder eines Fahrwegs des Fahrzeugs, weiteres Fahrzeug befindet sich innerhalb einer vorbestimmten Mindestdistanz zum Fahrzeug, weiteres Fahrzeug bewegt sich in Richtung eines Fahrschlauchs und/oder eines Fahrwegs des Fahrzeugs..

Die Datenverarbeitungseinrichtung ist zum Beispiel eingerichtet, bei Detektion eines Sicherheitsproblems zumindest eine Sicherheitsaktion durchzuführen.

Eine Sicherheitsaktion umfasst beispielsweise eine der folgenden Sicherheitsaktionen: Senden eines Stopp-Befehls an das Fahrzeug, Senden einer Ausweichtrajektorie an das Fahrzeug, Fernsteuern einer Quer- und/oder Längsführung des Fahrzeugs, damit das Fahrzeug beispielsweise ausweicht und/oder damit das Fahrzeug beispielsweise anhält.

Ein Senden und/oder Empfangen im Sinne der Beschreibung umfasst beispielsweise ein Senden respektive ein Empfangen über zumindest ein Kommunikationsnetzwerk, insbesondere über ein drahtloses Kommunikationsnetzwerk, beispielsweise ein WLAN-Netz und/oder ein Mobilfunknetz.

Die Kommunikationseinrichtung umfasst zum Beispiel eine oder mehrere Kommunikationsschnittstellen für eine Kommunikation, also für ein Senden und/oder Empfangen, mit dem Fahrzeug. Eine Kommunikationsschnittstelle ist zum Beispiel eine WLAN-Schnittstelle oder ist eine Mobilfunknetz-Schnittstelle.

Ein Kommunizieren im Sinne der Beschreibung umfasst zum Beispiel ein Senden und/oder ein Empfangen.

Wenn der Singular für die Sicherheitsaktion verwendet ist, soll stets der Plural und umgekehrt mitgelesen werden.

In einer Ausführungsform des Verfahrens umfasst dieses einen Schritt des Durchführens und/oder Steuerns der zumindest einen Sicherheitsaktion.

Das Fahrzeug ist insbesondere ein Landfahrzeug, beispielsweise ein Kraftfahrzeug. Das Fahrzeug kann beispielsweise ein Roboter sein. Der Roboter kann beispielsweise eine Transportfläche aufweisen, auf welcher beispielsweise ein weiteres Fahrzeug transportiert werden kann. Bei dem weiteren Fahrzeug kann es sich z. B. um ein Kraftfahrzeug handeln.

Die Begriffe "Assistieren" und "Unterstützen" können synonym verwendet werden.

Die Abkürzung "zumindest ein(e)" bedeutet "ein(e) oder mehrere".

Die hier beschriebenen Ausführungsformen können in beliebiger Weise miteinander kombiniert werden, auch wenn dies nicht explizit beschrieben ist.

Ein infrastrukturgestütztes Assistieren des Fahrzeugs bedeutet insbesondere, dass dem Fahrzeug Infrastrukturassistenzdaten zur Verfügung gestellt werden, also an diese gesendet werden.

Das Fahrzeug kann basierend auf den Infrastrukturassistenzdaten zum Beispiel Handlungsanweisungen ableiten. Das Fahrzeug kann zum Beispiel basierend auf den Infrastrukturassistenzdaten selbst entscheiden, was zu tun ist.

Infrastrukturassistenzdaten umfassen zum Beispiel ein oder mehrere der folgenden Elemente an Daten: Steuerbefehl zum zumindest teilautomatisierten Steuern einer Quer- und/oder Längsführung des Fahrzeugs, Fernsteuerbefehl zum zumindest teilautomatisierten Fernsteuern einer Quer- und/oder Längsführung des Fahrzeugs, Freigabebefehl zur Freigabe einer zumindest teilautomatisierten, insbesondere vollautomatisierten, Fahrt des Fahrzeugs der Fabrik, Solltrajektorie für das Fahrzeug, Zielposition innerhalb der Fabrik, Umgebungsdaten, welche eine Umgebung des Fahrzeugs repräsentieren, Vorgabe, was das Fahrzeug tun soll. Die Vorgabe gibt zum Beispiel vor, ob das Fahrzeug zum Beispiel fahren darf oder zum Beispiel anhalten muss.

Eine zumindest teilautomatisiert geführte Fahrt des Fahrzeugs innerhalb der Fabrik ist eine infrastrukturgestützte Fahrt des Fahrzeugs, ist also eine zumindest teilautomatisiert geführte Fahrt, bei welcher das Fahrzeug Unterstützung oder Assistenz durch die Infrastrukturassistenzdaten, welche in einer Infrastruktur ermittelt werden, erhält. Vorliegend werden die Infrastrukturassistenzdaten durch die Datenverarbeitungseinrichtung ermittelt.

Die Formulierung "zumindest teilautomatisiertes Führen" umfasst einen oder mehrere der folgenden Fälle: assistiertes Führen, teilautomatisiertes Führen, hochautomatisiertes Führen, vollautomatisiertes Führen. Die Formulierung "zumindest teilautomatisiert" umfasst also einen oder mehrere der folgenden Formulierungen: assistiert, teilautomatisiert, hochautomatisiert, vollautomatisiert. Ein zumindest teilautomatisiertes Führen des Fahrzeugs umfasst also ein zumindest teilautomatisiertes Steuern einer Quer- und/oder Längsführung des Fahrzeugs.

Assistiertes Führen bedeutet, dass ein Fahrer des Fahrzeugs dauerhaft entweder die Quer- oder die Längsführung des Fahrzeugs ausführt. Die jeweils andere Fahraufgabe (also ein Steuern der Längs- oder der Querführung des Fahrzeugs) wird automatisch durchgeführt. Das heißt also, dass bei einem assistierten Führen des Fahrzeugs entweder die Quer- oder die Längsführung automatisch gesteuert wird.

Teilautomatisiertes Führen bedeutet, dass in einer spezifischen Situation (zum Beispiel: Fahren auf einer Autobahn, Fahren innerhalb eines Parkplatzes, Fahren innerhalb einer Fabrik, Überholen eines Objekts, Fahren innerhalb einer Fahrspur, die durch Fahrspurmarkierungen festgelegt ist) und/oder für einen gewissen Zeitraum eine Längs- und eine Querführung des Fahrzeugs automatisch gesteuert werden. Ein Fahrer des Fahrzeugs muss selbst nicht manuell die Längs -und Querführung des Fahrzeugs steuern. Der Fahrer muss aber das automatische Steuern der Längs- und Querführung dauerhaft überwachen, um bei Bedarf manuell eingreifen zu können. Der Fahrer muss jederzeit zur vollständigen Übernahme der Fahrzeugführung bereit sein.

Hochautomatisiertes Führen bedeutet, dass für einen gewissen Zeitraum in einer spezifischen Situation (zum Beispiel: Fahren auf einer Autobahn, Fahren innerhalb eines Parkplatzes, Fahren innerhalb einer Fabrik, Überholen eines Objekts, Fahren innerhalb einer Fahrspur, die durch Fahrspurmarkierungen festgelegt ist) eine Längs- und eine Querführung des Fahrzeugs automatisch gesteuert werden. Ein Fahrer des Fahrzeugs muss selbst nicht manuell die Längs -und Querführung des Fahrzeugs steuern. Der Fahrer muss das automatische Steuern der Längs- und Querführung nicht dauerhaft überwachen, um bei Bedarf manuell eingreifen zu können. Bei Bedarf wird automatisch eine Übernahmeaufforderung an den Fahrer zur Übernahme des Steuerns der Längs- und Querführung ausgegeben, insbesondere mit einer ausreichenden Zeitreserve ausgegeben. Der Fahrer muss also potenziell in der Lage sein, das Steuern der Längs- und Querführung zu übernehmen. Grenzen des automatischen Steuerns der Quer- und Längsführung werden automatisch erkannt. Bei einem hochautomatisierten Führen ist es nicht möglich, in jeder Ausgangssituation automatisch einen risikominimalen Zustand herbeizuführen.

Vollautomatisiertes Führen bedeutet, dass in einer spezifischen Situation (zum Beispiel: Fahren auf einer Autobahn, Fahren innerhalb eines Parkplatzes, Fahren innerhalb einer Fabrik, Überholen eines Objekts, Fahren innerhalb einer Fahrspur, die durch Fahrspurmarkierungen festgelegt ist) eine Längs- und eine Querführung des Fahrzeugs automatisch gesteuert werden. Ein Fahrer des Fahrzeugs muss selbst nicht manuell die Längs -und Querführung des Fahrzeugs steuern. Der Fahrer muss das automatische Steuern der Längs- und Querführung nicht überwachen, um bei Bedarf manuell eingreifen zu können. Vor einem Beenden des automatischen Steuerns der Quer- und Längsführung erfolgt automatisch eine Aufforderung an den Fahrer zur Übernahme der Fahraufgabe (Steuern der Quer- und Längsführung des Fahrzeugs), insbesondere mit einer ausreichenden Zeitreserve. Sofern der Fahrer nicht die Fahraufgabe übernimmt, wird automatisch in einen risikominimalen Zustand zurückgeführt. Grenzen des automatischen Steuerns der Quer- und Längsführung werden automatisch erkannt. In allen Situationen ist es möglich, automatisch in einen risikominimalen Systemzustand zurückzuführen.

Eine Fahrt des Fahrzeugs ist insbesondere eine zumindest teilautomatisiert geführte Fahrt.

Das Fahrzeug ist zum Beispiel ein unbemanntes Fahrzeug. Dies bedeutet, dass es zum Beispiel keinen menschlichen Fahrer im oder auf dem Fahrzeug gibt, der das Fahrzeug steuert. Ein Fahrzeug ist zum Beispiel ein Kraftfahrzeug.

Beispielsweise sind mehrere erste Bereiche vorgesehen. Beispielsweise sind mehrere zweite Bereiche vorgesehen. Ausführungen, die in Zusammenhang mit einem Bereich gemacht sind, gelten analog für mehrere Bereiche und umgekehrt.

Ein Kraftfahrzeug im Sinne der Beschreibung ist beispielsweise ein AVP-Kraftfahrzeug. AVP steht für "Automated Valet Parking" und kann ins Deutsche mit "automatischer Parkservice" übersetzt werden. Ein AVP-Prozess umfasst z. B. ein zumindest hochautomatisiertes Führen des Kraftfahrzeugs von einer Drop-Zone, auch Abgabeposition, zu einer Parkposition und z. B. ein zumindest hochautomatisiertes Führen des Kraftfahrzeugs von einer Parkposition zu einer Abholposition, auch Pick-up-Zone genannt. An der Abgabeposition gibt ein Fahrer des Kraftfahrzeugs das Kraftfahrzeug für einen AVP-Prozess ab. An einer Abholposition wird das Kraftfahrzeug nach einem Ende des AVP-Prozesses abgeholt. Ein AVP-Kraftfahrzeug ist also ein Kraftfahrzeug, welches an einem AVP-Prozess teilnehmen kann.

In der Regel findet ein AVP-Prozess innerhalb eines Parkplatzes statt. Vorliegend kann ein solcher AVP-Prozess in analoger Weise auch innerhalb der Fabrik implementiert werden, was gemäß einer Ausführungsform so vorgesehen ist. Dies bedeutet, dass analog zu einem AVP-Prozess das Fahrzeug, beispielsweise das Kraftfahrzeug, innerhalb der Fabrik entsprechend zumindest hochautomatisiert geführt wird. Das Infrastruktursystem übernimmt also die Funktion und die Aufgabe eines infrastrukturseitigen AVP-Systems eines Parkplatzes. Das Überwachungssystem dient für eine gesonderte Überwachung aus Sicherheitsgründen des zweiten Bereichs.

Somit können für besondere Bereiche der Fabrik besonders hohe Sicherheitsanforderungen erfüllt werden.

Ein Assistieren im Sinne der Beschreibung ist also ein infrastrukturgestütztes Assistieren, also ein Assistieren durch die Datenverarbeitungseinrichtung, welche ebenfalls Teil der Infrastruktur ist.

Ein infrastrukturgestütztes Assistieren des Fahrzeugs bedeutet also insbesondere, dass dem Fahrzeug Infrastrukturassistenzdaten, wie vorstehenden beschrieben, zur Verfügung gestellt werden, also an dieses gesendet wird.

In einer Ausführungsform ist das Verfahren ein computerimplementiertes Verfahren.

Die Fabrik ist zum Beispiel eine Kraftfahrzeugfabrik, also eine Fabrik zur Herstellung von Kraftfahrzeugen.

Die Erfindung wird im Folgenden anhand von bevorzugten Ausführungsbeispielen näher erläutert. Hierbei zeigen:
- Fig. 1: ein System nach dem ersten Aspekt,
- Fig. 2: ein Ablaufdiagramm eines Verfahrens nach dem zweiten Aspekt,
- Fig. 3: eine erste und zweite Erfassungseinrichtung in einer beispielhaften Ausführungsform,
- Fig. 4: eine Fabrik nach dem dritten Aspekt,
- Fig. 5: ein maschinenlesbares Speichermedium nach dem fünften Aspekt,
- Fig. 6: eine Fabrik,
- Fig. 7: eine Sicherheitsarchitektur, wie sie durch das hier beschriebene Konzept implementiert sein kann, und
- Fig. 8: ein Fahrzeug.

Im Folgenden können für gleiche Merkmale gleiche Bezugszeichen verwendet werden.

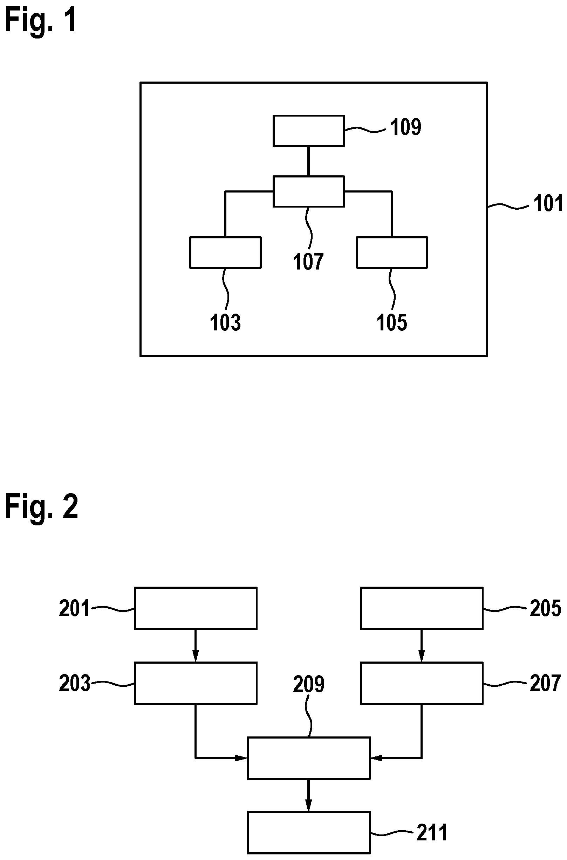

Fig. 1 zeigt ein System 101 zum infrastrukturgestützten Assistieren eines zumindest teilautomatisiert geführten, motorisierten Fahrzeugs bei seiner Fahrt durch eine Fabrik, wobei die Fabrik einen ersten Bereich und einen zweiten von dem ersten Bereich verschiedenen Bereich aufweist, umfassend:
eine erste Erfassungseinrichtung 103, welche eingerichtet ist, den ersten Bereich zu erfassen und auf der Erfassung basierende erste Erfassungsdaten auszugeben,
eine von der ersten Erfassungseinrichtung verschiedene zweite Erfassungseinrichtung 105, welche eingerichtet ist, den zweiten Bereich zu erfassen und auf der Erfassung basierende zweite Erfassungsdaten auszugeben,
wobei die zweite Erfassungseinrichtung 105 eine höhere Sicherheitsstufe erfüllt als die erste Erfassungseinrichtung 103,
eine Datenverarbeitungseinrichtung 107, welche eingerichtet ist, die ersten Erfassungsdaten und die zweiten Erfassungsdaten zu verarbeiten, um Infrastrukturassistenzdaten für eine zumindest teilautomatisiert geführte Fahrt des Fahrzeugs durch den ersten Bereich und durch den zweiten Bereich zu ermitteln, und
eine Kommunikationseinrichtung 109, welche eingerichtet ist, die ermittelten Infrastrukturassistenzdaten an das Fahrzeug zu senden.

Fig. 2 zeigt ein Ablaufdiagramm eines Verfahrens zum infrastrukturgestützten Assistieren eines zumindest teilautomatisiert geführten, motorisierten Fahrzeugs bei seiner Fahrt durch eine Fabrik, wobei die Fabrik einen ersten Bereich und einen zweiten von dem ersten Bereich verschiedenen Bereich aufweist, unter Verwendung eines Systems nach einem der vorherigen Ansprüche, umfassend die folgenden Schritte:
Erfassen 201 des ersten Bereichs durch die erste Erfassungseinrichtung, Ausgeben 203 von auf der Erfassung basierende erste Erfassungsdaten durch die erste Erfassungseinrichtung,
Erfassen 205 des zweiten Bereichs durch die zweite Erfassungseinrichtung Ausgeben 207 von auf der Erfassung basierende zweite Erfassungsdaten durch die zweite Erfassungseinrichtung,
Verarbeiten 209 der ersten Erfassungsdaten und der zweiten Erfassungsdaten durch die Datenverarbeitungseinrichtung, um Infrastrukturassistenzdaten für eine für eine zumindest teilautomatisiert geführte Fahrt des Fahrzeugs durch den ersten Bereich und durch den zweiten Bereich zu ermitteln,
Senden 211 der ermittelten Infrastrukturassistenzdaten durch die Kommunikationseinrichtung an das Fahrzeug.

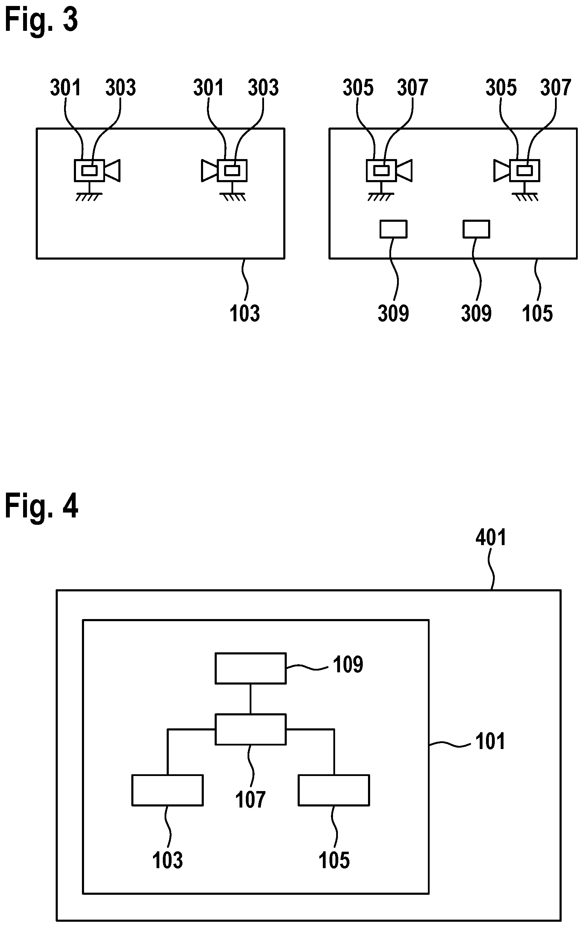

Fig. 3 zeigt die erste und die zweite Erfassungseinrichtung 103, 105 des Systems 101 in einer beispielhaften Ausführungsform. Die erste Erfassungseinrichtung 103 umfasst zwei Videokameras 301 jeweils aufweisend einen Bildsensor 303. Die zweite Erfassungseinrichtung 105 umfasst zwei Videokameras 305 jeweils aufweisend einen Bildsensor 307 und zwei Radarsensoren 309. Die Videokameras 301 der ersten Erfassungseinrichtung 103 erfüllen die Sicherheitsanforderung QM. Die zwei Videokameras 305 und die zwei Radarsensoren 309 der zweiten Erfassungseinrichtung 105 erfüllen die Sicherheitsanforderung ASIL-D.

In nicht gezeigten Ausführungsformen kann vorgesehen sein, dass anstelle oder zusätzlich zu den vorstehend genannten Umfeldsensoren, Bildsensoren 303 und Radarsensoren 309, ein oder mehrere weitere Umfeldsensoren für die jeweilige Erfassungseinrichtung 103, 105 vorgesehen sein können.

Fig. 4 zeigt eine Fabrik 401, umfassend das System 101 gemäß Fig. 1.

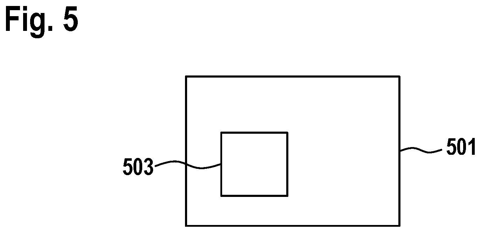

Fig. 5 zeigt ein maschinenlesbares Speichermedium 501, auf dem ein Computerprogramm 503 gespeichert ist, das Computerprogramm 503 umfasst Befehle, die bei Ausführung des Computerprogramms 503 durch einen Computer diesen Veranlassen, ein Verfahren gemäß dem zweiten Aspekt auszuführen.

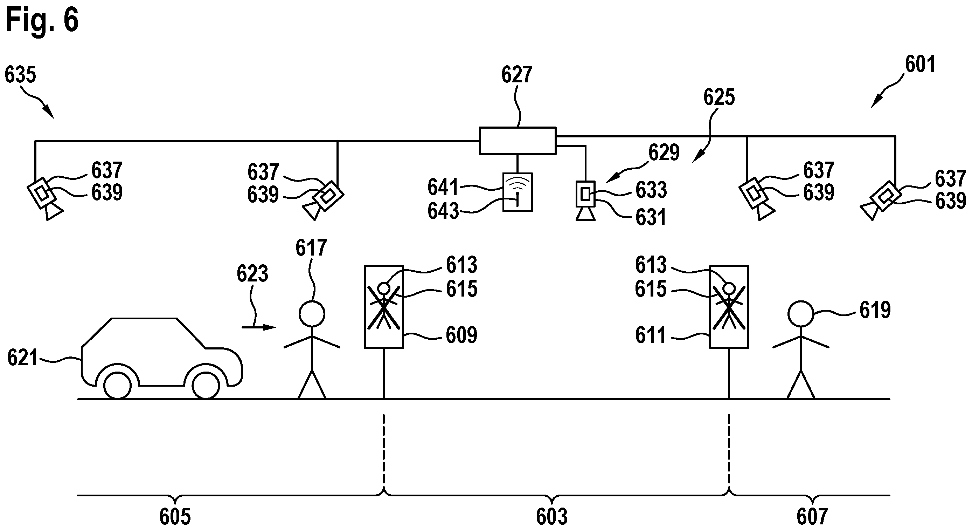

Fig. 6 zeigt eine Fabrik 601.

Es ist ein erster Bereich 603 innerhalb der Fabrik 601 vorgesehen oder festgelegt, der auch als ein Nicht-Sicherheitsbereich bezeichnet werden kann. Weiter sind zwei zweite Bereiche 605, 607 festgelegt, wobei sich der erste Bereiche 603 zwischen den beiden zweiten Bereichen 605, 607 befindet, wobei diese unmittelbar aneinander angrenzen.

Die beiden zweiten Bereichen 605, 607 können auch als Sicherheitsbereich bezeichnet werden, da für diese höhere Sicherheitsanforderungen gestellt werden als für den ersten Bereich 603.

Innerhalb des ersten Bereichs 603 dürfen sich keine Menschen befinden. Dies ist durch zwei Schilder 609 und 611 gekennzeichnet, die jeweils an der Grenze zwischen den entsprechenden Bereichen angeordnet sind und einen Menschen 613 zeigen, der durch ein Kreuz 615 durchgestrichen ist.

Somit kann davon ausgegangen werden, dass sich im Regelfall innerhalb des ersten Bereiches 603 keine Menschen befinden. Wenn also ein Fahrzeug, beispielsweise ein Kraftfahrzeug, durch den ersten Bereich 603 fährt, besteht in der Regel keine Gefahr einer Kollision des Fahrzeugs mit einem Menschen. Folglich können für eine solche Fahrt geringere Sicherheitsbedingungen oder Sicherheitsanforderungen erfüllt sein als für eine Fahrt des Fahrzeugs in den zweiten Bereichen 605, 607, innerhalb welchem sich Menschen befinden dürfen. Dies ist symbolisch durch zwei Menschen 617 und 619 gekennzeichnet, die sich respektive innerhalb des zweiten Bereichs 605 und des zweiten Bereichs 607 befinden.

Beispielhaft ist ein Kraftfahrzeug 621 gezeigt, welches in Fahrtrichtung, gekennzeichnet durch einen Pfeil mit dem Bezugszeichen 623, bezogen auf die Papierebene von links nach rechts vom zweiten Bereich 605 in den ersten Bereich 603 fahren will.

Da sich also das Kraftfahrzeug 621 innerhalb eines Bereichs befindet, innerhalb welchem Menschen sich aufhalten, wird für eine solche Fahrt eine oder werden für eine solche Fahrt mehrere Sicherheitsanforderungen gestellt, die höher sind als für eine Fahrt des Kraftfahrzeugs 621 durch den ersten Bereich 603.

Innerhalb der Fabrik 601 ist folglich gemäß dem hier beschriebenen Konzept ein System 625 nach dem ersten Aspekt implementiert.

Das System 625 umfasst eine Datenverarbeitungseinrichtung 627 sowie eine erste Erfassungseinrichtung 629, die eine Videokamera 631 umfassend einen Bildsensor 633 umfasst. Die Videokamera 631 ist so innerhalb des ersten Bereichs 603 angeordnet, dass diese den Bereich erfassen kann. Abhängig von einer Länge oder Breite des Bereichs 603 können zum Beispiel auch mehrere Videokameras vorgesehen sein.

Die Videodaten der Videokamera 631 werden der Datenverarbeitungseinrichtung 627 zur Verfügung gestellt, welche basierend darauf Infrastrukturassistenzdaten ermitteln und an das Kraftfahrzeug 621 senden kann, um dem Kraftfahrzeug bei seiner Fahrt durch den ersten Bereich 603 zu assistieren. Beispielweise ermittelt die Datenverarbeitungseinrichtung 627 eine Solltrajektorie für das Kraftfahrzeug 621, welche durch den ersten Bereich 603 führt.

Weiter umfasst das System 625 eine von der ersten Erfassungseinrichtung 629 verschiedene zweite Erfassungseinrichtung 635. Die zweite Erfassungseinrichtung 635 umfasst mehrere Videokameras 637 umfassend jeweils einen Bildsensor 639.

Die Videokameras 637 sind jeweils so innerhalb der zweiten Bereiche 605, 607 angeordnet, dass diese diese Bereiche erfassen und auf der Erfassung basierende Videodaten an die Datenverarbeitungseinrichtung 627 übermitteln oder senden. Basierend auf diesen Videodaten kann die Datenverarbeitungseinrichtung 627 zum einen Infrastrukturassistenzdaten ermitteln und zum anderen kann sie basierend auf diesen Videodaten ermitteln, ob innerhalb der zweiten Bereiche 605, 607 ein oder mehrere Sicherheitsprobleme aufgetreten sind, wobei bei Detektion eines Sicherheitsproblems die Datenverarbeitungseinrichtung 627 eine Sicherheitsaktion durchführt.

Alternativ oder zusätzlich kann die erste Erfassungseinrichtung 629 weitere Videokameras umfassen, die innerhalb der zweiten Bereiche 605, 607 angeordnet sind und diese erfassen, sodass die erste Erfassungseinrichtung 629 der Datenverarbeitungseinrichtung 627 eigene Videodaten der zweiten Bereich 605, 607 bereitstellen kann respektive bereitstellt.

Alternativ oder zusätzlich zu den im Zusammenhang mit der Fig. 6 genannten speziellen Umfeldsensoren können ein oder mehrere weitere Umfeldsensoren vorgesehen sein.

Das System 625 umfasst eine Kommunikationseinrichtung 641 aufweisend eine drahtlose Kommunikationsschnittstelle 643. Mittels der Kommunikationseinrichtung 641 kann die Datenverarbeitungseinrichtung 627 mit dem Kraftfahrzeug 621 kommunizieren und diesem beispielsweise die ermittelten Infrastrukturassistenzdaten senden.

Gemäß dem hier beschriebenen Konzept ist vorgesehen, dass die zweite Erfassungseinrichtung 635 höhere Sicherheitsanforderungen erfüllt als die erste Erfassungseinrichtung 629.

Beispielsweise erfüllt die erste Erfassungseinrichtung 629 lediglich die Sicherheitsstufe QM. QM steht für "Quality Management", was bedeutet, dass Risiken tolerierbar sind, so dass Sicherheitsanforderungen in besonderer Hinsicht unnötig sind und lediglich Standardqualitätsanforderungen ausreichend sind.

Beispielsweise müssen die Videokameras 637 der zweiten Erfassungseinrichtung 635 ASIL-D erfüllen und beispielsweise muss die Videokamera 631 der ersten Erfassungseinrichtung 629 nur QM erfüllen.

In dem in Fig. 6 gezeigten Beispiel befindet sich ein Mensch 617 unmittelbar vor dem Kraftfahrzeug 621. Dies kann beispielsweise darin begründet sein, dass der Mensch 617 plötzlich und unerwartet in den Fahrweg des Kraftfahrzeugs 621 getreten ist. Dies wird durch die Videokameras 637 erfasst und durch entsprechende Verarbeitung von der Datenverarbeitungseinrichtung 627 detektiert. Über die drahtlose Kommunikationsschnittstelle 643 kann die Datenverarbeitungseinrichtung 627 beispielsweise einen Stoppbefehl an das Kraftfahrzeug 621 senden, so dass dieses ansprechend auf den Empfang beispielsweise unmittelbar anhalten kann, so dass eine Kollision mit dem Menschen 617 vermieden werden kann.

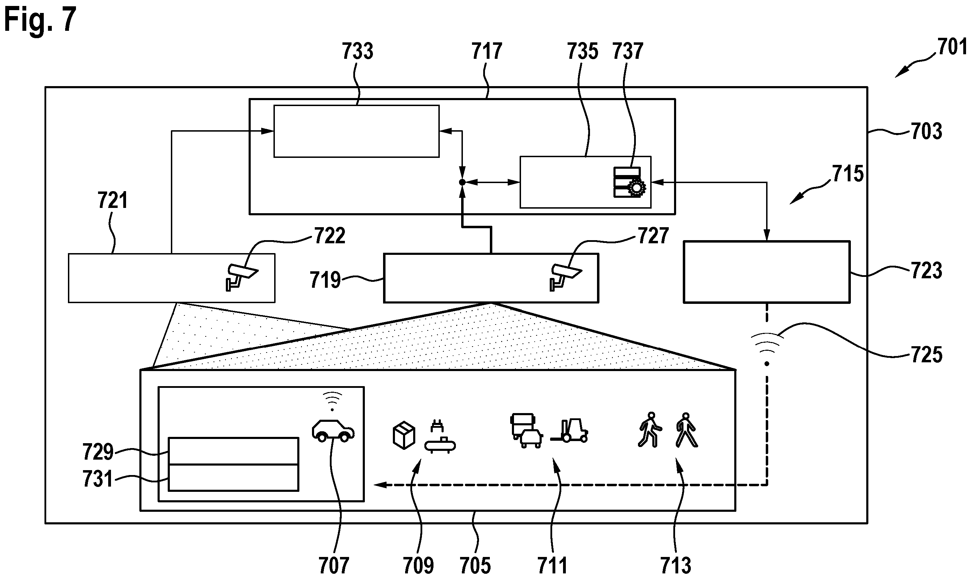

Fig. 7 zeigt eine Sicherheitsarchitektur 701, wie sie gemäß dem hier beschriebenen Konzept innerhalb einer Fabrik 703 implementiert sein kann.

Innerhalb der Fabrik 703 ist ein Bereich 705 festgelegt, innerhalb welchem sich ein Kraftfahrzeug 707 befinden darf respektive durch den Bereich 705 fahren darf respektive innerhalb des Bereichs 705 fahren darf. Dieses Fahren ist ein zumindest teilautomatisiertes Fahren. Innerhalb des Bereichs 705 befinden sich beispielsweise Objekte 709 oder beispielsweise fahren weitere Fahrzeuge 711 und/oder befinden sich arbeitende Menschen 713. Es findet also ein Mischverkehr zwischen Kraftfahrzeug 707 und weiteren Fahrzeugen 711 respektive Menschen 713 statt.

Es ist ein System 715 nach dem ersten Aspekt innerhalb der Fabrik 703 implementiert. Das System 715 umfasst eine Datenverarbeitungseinrichtung 717, eine erste Erfassungseinrichtung 719 und eine zweite Erfassungseinrichtung 721, welche zum Beispiel eine Videokamera 722 oder mehrere nicht gezeigte Videokameras umfasst, sowie eine Kommunikationseinrichtung 723, die beispielsweise eine drahtlose Kommunikationsschnittstelle 725 umfassen kann, über welche die Datenverarbeitungseinrichtung 717 mit dem Kraftfahrzeug 707 kommunizieren kann. Die erste Erfassungseinrichtung 719 erfüllt die Sicherheitsanforderung QM. Die zweite Erfassungseinrichtung 721 erfüllt mindestens die Sicherheitsanforderung ASIL-A.

Die erste Erfassungseinrichtung 719 umfasst beispielsweise eine Videokamera 727 oder auch mehrere nicht gezeigte Videokameras, die den Bereich 705 erfassen. Die entsprechenden Videodaten werden durch die erste Erfassungseinrichtung 719 an die Datenverarbeitungseinrichtung 717 gesendet, welche basierend darauf Infrastrukturassistenzdaten für das Kraftfahrzeug 707 ermitteln kann und unter Verwendung der der drahtlosen Kommunikationsschnittstelle 725 an das Kraftfahrzeug 707 senden kann.

Alternativ oder zusätzlich zu den im Zusammenhang mit der Fig. 7 genannten speziellen Umfeldsensoren können ein oder mehrere weitere Umfeldsensoren vorgesehen sein.

Während das Kraftfahrzeug 707 durch den Bereich 705 fährt, erfasst die zweite Erfassungseinrichtung 721 ebenfalls den Bereich 705 und übermittelt auf der Erfassung basierende zweite Erfassungsdaten an die Datenverarbeitungseinrichtung 717, welche die zweiten Erfassungsdaten verarbeitet, um ein oder mehrere Sicherheitsprobleme zu detektieren, die beispielsweise während der Fahrt des Kraftfahrzeugs 707 durch den Bereich 705 auftreten können.

Beispielsweise kann ein weiteres Fahrzeug 711 sich auf Kollisionskurs zum Kraftfahrzeug 707 befinden. Dies wird durch die zweite Erfassungseinrichtung 721 erfasst und durch entsprechende Verarbeitung der Videodaten von der zweiten Datenverarbeitungseinrichtung 721 detektiert.

Entsprechend sendet dann die Datenverarbeitungseinrichtung 717 beispielsweise an das Kraftfahrzeug 707 einen Stoppbefehl oder eine Ausweichtrajektorie.

Beispielhaft ist für die zweite Erfassungseinrichtung 721 analog zur ersten Erfassungseinrichtung 719 ebenfalls eine Videokamera 729 gezeigt, wobei natürlich auch mehrere Videokameras vorgesehen sein können, die unabhängig von der Videokamera 727 den Bereich 705 erfassen.

Somit handelt es sich bei dem Bereich 705 um einen zweiten Bereich im Sinne der Beschreibung.

Dies bedeutet, dass gemäß dem hier beschriebenen Konzept das Kraftfahrzeug 707 bei seiner normalen Fahraufgabe, symbolisch gekennzeichnet durch einen Block mit dem Bezugszeichen 729 durch die Datenverarbeitungseinrichtung 717 unterstützt wird. Die Überwachung betreffend eine Sicherheit der Fahrt wird unter Verwendung der zweiten Erfassungsdaten durchgeführt. Bei Detektion eines Sicherheitsproblems wird dem Kraftfahrzeug 707 beispielsweise ein Notstopp befohlen, was symbolisch durch einen Block mit dem Bezugszeichen 731 gekennzeichnet ist.

Die Datenverarbeitungseinrichtung 717 verarbeitet die zweiten Erfassungsdaten gemäß einem Funktionsblock 733, um zumindest ein Sicherheitsproblem zu detektieren. Die Datenverarbeitungseinrichtung 717 verarbeitet die ersten Erfassungsdaten gemäß einem weiteren Funktionsblock 735, um Infrastrukturassistenzdaten für die normale Fahraufgabe zu ermitteln. Zum Verarbeiten von Daten umfasst die Datenverarbeitungseinrichtung 717 beispielsweise einen Server 737.

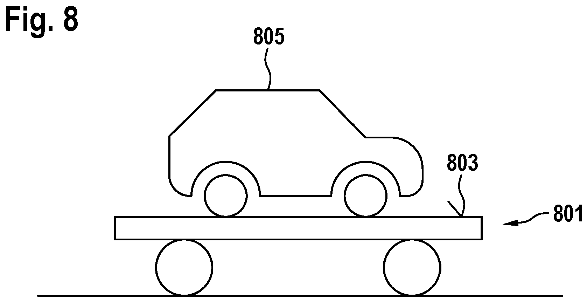

Fig. 8 zeigt ein motorisiertes Fahrzeug 801 aufweisend eine Transportplattform 803, auf welcher ein Kraftfahrzeug 908055 abgestellt ist. Das Kraftfahrzeug 805 kann somit vom Fahrzeug 801 durch eine Fabrik transportiert werden. Dies ist insbesondere dann von Vorteil, wenn das Kraftfahrzeug 805 noch nicht aus eigener Kraft fahren kann, weil es noch nicht vollständig montiert wurde.

Zusammenfassend basiert das hierin beschriebene Konzept insbesondere darauf, dass zwei voneinander verschiedene Erfassungseinrichtungen verwendet werden, um unterschiedliche Bereiche einer Fabrik zu erfassen, wobei diese Erfassungseinrichtungen unterschiedliche Sicherheitsanforderungen erfüllen, derart, dass die eine höhere Sicherheitsanforderungen erfüllt als die andere. Die Erfassungsdaten derjenigen Erfassungseinrichtung mit der höheren Sicherheitsanforderung werden insbesondere verwendet, um potenzielle Sicherheitsprobleme zu detektieren. Die Erfassungsdaten derjenigen Erfassungseinrichtung mit der niedrigeren Sicherheitsanforderungen werden insbesondere für die normale Fahraufgabe verwendet.

Die Aufgabe, ein motorisiertes Fahrzeug zumindest teilautomatisiert innerhalb einer Fabrik zu führen und ihm hierbei zu assistieren, umfasst beispielsweise folgendes: Beobachtung einer Umgebung des Fahrzeugs, planen einer Fahrt des Fahrzeugs, Fahren des Fahrzeugs durch die Infrastruktur und Eingriff bei einer kritischen Situation, also bei Auftreten eines Sicherheitsproblems.

Die sicherheitsrelevanten Teile dieser Aufgabe werden basierend auf den zweiten Erfassungsdaten durchgeführt und nicht basierend auf den ersten Erfassungsdaten. Das bedeutet, dass nur die zweiten Erfassungsdaten verarbeitet werden, um für den zweiten Bereich zumindest ein Sicherheitsproblem zu detektieren. Die ersten Erfassungsdaten werden hierfür nicht verwendet, da diese von der ersten Erfassungseinrichtung ermittelt wurden, welche verglichen mit der zweiten Erfassungseinrichtung nur eine geringere Sicherheitsanforderung erfüllt.

Somit gibt es zwei voneinander unabhängige Erfassungseinrichtung: Die erste Erfassungseinrichtung, dessen erste Erfassungsdaten für die Assistenz betreffend einer normalen Fahraufgabe verwendet werden und nicht für sicherheitskritische Funktionen, und die zweite Erfassungseinrichtung, dessen zweite Erfassungsdaten für die sicherheitskritischen Funktionen verwendet werden.

Hierbei ist insbesondere vorgesehen, dass die zweite Erfassungseinrichtung eine höhere Sicherheitsstufe erfüllt als die erste Erfassungseinrichtung. Dies kann z. B. dadurch realisiert sein, dass die zweite Erfassungseinrichtung eine höhere Redundanz aufweist bzgl. beispielsweise Hardware und/oder Software.

## Patentansprüche

1. System (101) zum infrastrukturgestützten Assistieren eines zumindest teilautomatisiert geführten, motorisierten Fahrzeugs (621, 701, 801) bei seiner Fahrt durch eine Fabrik (401, 703), wobei die Fabrik (401, 703) einen ersten Bereich (603) und einen zweiten von dem ersten Bereich (603) verschiedenen Bereich (605, 607, 705) aufweist,
wobei der erste Bereich ein Bereich ist, innerhalb welchem sich keine Menschen aufhalten dürfen, und
wobei der zweite Bereich ein Bereich ist, innerhalb welchem sich Menschen befinden dürfen,
das System umfassend:
eine erste Erfassungseinrichtung (103), welche eingerichtet ist, den ersten Bereich (603) zu erfassen und auf der Erfassung basierende erste Erfassungsdaten auszugeben,
eine von der ersten Erfassungseinrichtung (103) verschiedene zweite Erfassungseinrichtung (105), welche eingerichtet ist, den zweiten Bereich (605, 607, 705) zu erfassen und auf der Erfassung basierende zweite Erfassungsdaten auszugeben,
wobei die zweite Erfassungseinrichtung (105) eine höhere Sicherheitsstufe erfüllt als die erste Erfassungseinrichtung (103),
eine Datenverarbeitungseinrichtung (107), welche eingerichtet ist, die ersten Erfassungsdaten und die zweiten Erfassungsdaten zu verarbeiten, um Infrastrukturassistenzdaten für eine für eine zumindest teilautomatisiert geführte Fahrt des Fahrzeugs (621, 701, 801) durch den ersten Bereich (603) und durch den zweiten Bereich zu ermitteln,
eine Kommunikationseinrichtung (109), welche eingerichtet ist, die ermittelten Infrastrukturassistenzdaten an das Fahrzeug (621, 701, 801) zu senden, wobei die jeweilige Sicherheitsstufe der ersten Erfassungseinrichtung (103) und der zweiten Erfassungseinrichtung (105) ein Element ausgewählt aus der folgenden Gruppe von Sicherheitsstufen ist: QM, ASIL-A, ASIL-B, ASIL-C, ASIL-D, SIL-1, SIL-2, SIL-3.

2. System (101) nach Anspruch 1, wobei die zweite Erfassungseinrichtung (105) mehrere Umfeldsensoren umfasst, welche derart angeordnet sind, dass zumindest zwei der Umfeldsensoren einen gemeinsamen Teilbereich des zweiten Bereichs erfassen können.

3. System (101) nach einem der vorherigen Ansprüche, wobei die zweite Erfassungseinrichtung (105) mehrere Umfeldsensoren umfasst, welche auf einer jeweiligen Erfassungstechnologie basieren, wobei die Umfeldsensoren derart angeordnet sind, dass zumindest zwei Umfeldsensoren mit einer unterschiedlichen Erfassungstechnologie einen gemeinsamen Teilbereich des zweiten Bereichs erfassen können.

4. System (101) nach einem der vorherigen Ansprüche, wobei die Datenverarbeitungseinrichtung (107) eingerichtet ist, die zweiten Erfassungsdaten unter Verwendung von zwei unterschiedlichen Auswertealgorithmen zu verarbeiten, um entsprechend zwei Ergebnisses des jeweiligen Verarbeitens zu erhalten, wobei die Datenverarbeitungseinrichtung (107) eingerichtet ist, die Infrastrukturassistenzdaten basierend auf den zwei Ergebnissen zu ermitteln.

5. System (101) nach einem der vorherigen Ansprüche, wobei die erste Erfassungseinrichtung eingerichtet ist, den zweiten Bereich zu erfassen.

6. System (101) nach einem der vorherigen Ansprüche, umfassend zumindest eine in einem Übergangsbereich von dem ersten Bereich (603) zu dem zweiten Bereich (605, 607, 705) angeordnete Lichtschranke, welche eingerichtet ist, eine Bewegung eines Objekts zu detektieren und bei Detektion ein Detektionssignal auszugeben, wobei die Datenverarbeitungseinrichtung (107) eingerichtet ist, ansprechend auf das Detektionssignal zu prüfen, ob es sich bei dem Objekt um das Fahrzeug (621, 707, 801) handelt oder nicht, wobei, wenn nein, festzulegen, dass ein Sicherheitsproblem detektiert wurde.

7. Verfahren zum infrastrukturgestützten Assistieren eines zumindest teilautomatisiert geführten, motorisierten Fahrzeugs (621, 701, 801) bei seiner Fahrt durch eine Fabrik (401, 703), wobei die Fabrik (401, 703) einen ersten Bereich (603) und einen zweiten von dem ersten Bereich (603) verschiedenen Bereich (605, 607, 705) aufweist, unter Verwendung eines Systems nach einem der vorherigen Ansprüche, umfassend die folgenden Schritte:
Erfassen (201) des ersten Bereichs durch die erste Erfassungseinrichtung (103) Ausgeben (203) von auf der Erfassung basierende erste Erfassungsdaten durch die erste Erfassungseinrichtung (103),
Erfassen (205) des zweiten Bereichs durch die zweite Erfassungseinrichtung (105)
Ausgeben (207) von auf der Erfassung basierende zweite Erfassungsdaten durch die zweite Erfassungseinrichtung (105),
Verarbeiten (209) der ersten Erfassungsdaten und der zweiten Erfassungsdaten durch die Datenverarbeitungseinrichtung (107), um Infrastrukturassistenzdaten für eine für eine zumindest teilautomatisiert geführte Fahrt des Fahrzeugs (621, 701, 801) durch den ersten Bereich (603) und durch den zweiten Bereich zu ermitteln,
Senden (211) der ermittelten Infrastrukturassistenzdaten durch die Kommunikationseinrichtung (109) an das Fahrzeug (621, 701, 801).

8. Fabrik (401, 703), umfassend ein System (101) nach einem der Ansprüche 1 bis 6.

9. Computerprogramm (503), umfassend Befehle, die bei Ausführung des Computerprogramms (503) durch einen Computer diesen veranlassen, ein Verfahren gemäß Anspruch 7 auszuführen.

10. Maschinenlesbares Speichermedium (501), auf dem das Computerprogramm (503) nach Anspruch 9 gespeichert ist.

## Claims

1. System (101) for providing infrastructure-based assistance to a motorized vehicle (621, 701, 801) guided in an at least partially automated manner during its journey through a factory (401, 703), wherein the factory (401, 703) has a first region (603) and a second region (605, 607, 705) different from the first region (603),
wherein the first region is a region within which no people are allowed to be present, and
wherein the second region is a region within which people are allowed to be present,
the system comprising:
a first capture device (103) which is configured to capture the first region (603) and output first capture data based on the capture,
a second capture device (105) which differs from the first capture device (103) and is configured to capture the second region (605, 607, 705) and output second capture data based on the capture,
wherein the second capture device (105) satisfies a higher safety level than the first capture device (103),
a data processing device (107) which is configured to process the first capture data and the second capture data in order to determine infrastructure assistance data for a journey of the vehicle (621, 701, 801) through the first region (603) and through the second region, which journey is guided in an at least partially automated manner,
a communication device (109) which is configured to send the determined infrastructure assistance data to the vehicle (621, 701, 801), wherein the respective safety level of the first capture device (103) and of the second capture device (105) is an element selected from the following group of safety levels: QM, ASIL-A, ASIL-B, ASIL-C, ASIL-D, SIL-1, SIL-2, SIL-3.

2. System (101) according to Claim 1, wherein the second capture device (105) comprises a plurality of environmental sensors which are arranged in such a way that at least two of the environmental sensors can capture a common partial region of the second region.

3. System (101) according to one of the preceding claims, wherein the second capture device (105) comprises a plurality of environmental sensors which are based on a respective capture technology, wherein the environmental sensors are arranged in such a way that at least two environmental sensors with a different capture technology can capture a common partial region of the second region.

4. System (101) according to one of the preceding claims, wherein the data processing device (107) is configured to process the second capture data using two different evaluation algorithms in order to correspondingly obtain two results of the respective processing, wherein the data processing device (107) is configured to determine the infrastructure assistance data on the basis of the two results.

5. System (101) according to one of the preceding claims, wherein the first capture device is configured to capture the second region.

6. System (101) according to one of the preceding claims, comprising at least one light barrier arranged in a transition region from the first region (603) to the second region (605, 607, 705), which light barrier is configured to detect a movement of an object and to output a detection signal upon detection, wherein the data processing device (107) is configured to check whether or not the object is the vehicle (621, 707, 801) in response to the detection signal, and, if no, to specify that a safety problem has been detected.

7. Method for providing infrastructure-based assistance to a motorized vehicle (621, 701, 801) guided in an at least partially automated manner during its journey through a factory (401, 703), wherein the factory (401, 703) has a first region (603) and a second region (605, 607, 705) different from the first region (603), using a system according to one of the preceding claims, comprising the following steps of:
capturing (201) the first region by way of the first capture device (103), outputting (203) first capture data based on the capture by way of the first capture device (103),
capturing (205) the second region by way of the second capture device (105),
outputting (207) second capture data based on the capture by way of the second capture device (105),
processing (209) the first capture data and the second capture data by way of the data processing device (107) in order to determine infrastructure assistance data for a journey of the vehicle (621, 701, 801) through the first region (603) and through the second region, which journey is guided in an at least partially automated manner,
sending (211) the determined infrastructure assistance data to the vehicle (621, 701, 801) by way of the communication device (109).

8. Factory (401, 703) comprising a system (101) according to one of Claims 1 to 6.

9. Computer program (503) comprising instructions which, when the computer program (503) is executed by a computer, cause the latter to perform a method according to Claim 7.

10. Machine-readable storage medium (501) on which the computer program (503) according to Claim 9 is stored.

## Revendications

1. Système (101) d'assistance avec le support d'une infrastructure d'un véhicule motorisé (621, 701, 801) guidé au moins de manière partiellement automatisée lors de son trajet dans une usine (401, 703), l'usine (401, 703) comportant une première zone (603) et une deuxième zone (605, 607, 705) différente de la première zone (603),
la première zone étant une zone à l'intérieur de laquelle aucune personne n'est autorisée à rester, et
la deuxième zone étant une zone à l'intérieur de laquelle des personnes sont autorisées à rester,
le système comprenant :
un premier dispositif de détection (103), qui est mis au point pour détecter la première zone (603) et pour produire des premières données de détection basées sur la détection,
un deuxième dispositif de détection (105), différent du premier dispositif de détection (103), qui est mis au point pour détecter la deuxième zone (605, 607, 705) et pour produire des deuxièmes données de détection basées sur la détection,
le deuxième dispositif de détection (105) remplissant un niveau de sécurité plus élevé que le premier dispositif de détection (103),
un dispositif de traitement de données (107), qui est mis au point pour traiter les premières données de détection et les deuxièmes données de détection pour déterminer des données d'assistance par infrastructure pour un trajet du véhicule (621, 701, 801), guidé au moins de manière partiellement automatisée, à travers la première zone (603) et à travers la deuxième zone,
un dispositif de communication (109), qui est mis au point pour envoyer les données d'assistance par infrastructure déterminées au véhicule (621, 701, 801), le niveau de sécurité respectif du premier dispositif de détection (103) et du deuxième dispositif de détection (105) étant un élément choisi dans le groupe de niveaux de sécurité suivant : QM, ASIL-A, ASIL-B, ASIL-C, ASIL-D, SIL-1, SIL-2, SIL-3.

2. Système (101) selon la revendication 1, le deuxième dispositif de détection (105) comprenant plusieurs capteurs d'environnement, qui sont disposés de telle manière qu'au moins deux des capteurs d'environnement peuvent détecter une zone partielle commune de la deuxième zone.

3. Système (101) selon l'une des revendications précédentes, le deuxième dispositif de détection (105) comprenant plusieurs capteurs d'environnement, qui sont basés sur une technologie de détection respective, les capteurs d'environnement étant disposés de telle manière qu'au moins deux capteurs d'environnement avec une technologie de détection différente peuvent détecter une zone partielle commune de la deuxième zone.

4. Système (101) selon l'une des revendications précédentes, le dispositif de traitement de données (107) étant mis au point pour traiter les deuxièmes données de détection en utilisant deux algorithmes d'évaluation différents pour obtenir de manière correspondante deux résultats du traitement respectif, le dispositif de traitement de données (107) étant mis au point pour déterminer les données d'assistance par infrastructure sur la base des deux résultats.

5. Système (101) selon l'une des revendications précédentes, le premier dispositif de détection étant mis au point pour détecter la deuxième zone.

6. Système (101) selon l'une des revendications précédentes, comprenant au moins une barrière lumineuse disposée dans une zone de transition de la première zone (603) vers la deuxième zone (605, 607, 705), laquelle est mise au point pour détecter un mouvement d'un objet et pour produire un signal de détection lors de la détection, le dispositif de traitement de données (107) étant mis au point pour vérifier, en réponse au signal de détection, si l'objet est le véhicule (621, 707, 801) ou non, pour définir, dans le cas contraire, qu'un problème de sécurité a été détecté.

7. Procédé d'assistance avec le support d'une infrastructure d'un véhicule motorisé (621, 701, 801) guidé au moins de manière partiellement automatisée lors de son trajet dans une usine (401, 703), l'usine (401, 703) comportant une première zone (603) et une deuxième zone (605, 607, 705) différente de la première zone (603), en utilisant un système selon l'une des revendications précédentes, comprenant les étapes suivantes :
détection (201) de la première zone par le premier dispositif de détection (103) production (203) de premières données de détection basées sur la détection par le premier dispositif de détection (103),
détection (205) de la deuxième zone par le deuxième dispositif de détection (105)
production (207) de deuxièmes données de détection basées sur la détection par le deuxième dispositif de détection (105),
traitement (209) des premières données de détection et des deuxièmes données de détection par le dispositif de traitement de données (107) pour déterminer des données d'assistance par infrastructure pour un trajet du véhicule (621, 701, 801) guidé au moins de manière partiellement automatisée à travers la première zone (603) et à travers la deuxième zone,
envoi (211) des données d'assistance par infrastructure déterminées au véhicule (621, 701, 801) par le dispositif de communication (109).

8. Usine (401, 703), comprenant un système (101) selon l'une des revendications 1 à 6.

9. Programme informatique (503), comprenant des instructions qui, lorsque le programme informatique (503) est exécuté par un ordinateur, amènent celui-ci à exécuter un procédé selon la revendication 7.

10. Support de stockage (501) lisible par machine, sur lequel est stocké le programme informatique (503) selon la revendication 9.
